# EUROPÄISCHE PATENTSCHRIFT

(11) **EP 4 107 320 B1**
(45) Veröffentlichungstag und Bekanntmachung des Hinweises auf die Patenterteilung: **05.06.2024**
(21) Anmeldenummer: 21706889.9
(22) Anmeldetag: 18.02.2021
(51) Int. Cl.: D01H 4/12, F16C 27/00, F16C 33/00

(54) **WELLENLAGER ZUR LAGERUNG EINES SPINNROTORS EINER ROTORSPINNMASCHINE**
SHAFT BEARING FOR MOUNTING A SPINNING ROTOR OF A ROTOR SPINNING MACHINE
PALIER D'ARBRE DESTINÉ À SUPPORTER UN ROTOR DE FILAGE D'UNE MACHINE DE FILATURE À ROTOR

(30) Priorität: 21.02.2020 DE 102020104627
(43) Veröffentlichungstag der Anmeldung: 28.12.2022
(73) Patentinhaber: Saurer Spinning Solutions GmbH & Co. KG, 52531 Übach-Palenberg (DE)
(72) Erfinder: JAKOB, Michael, 93051 Regensburg (DE); HABERKORN, Dieter, 73066 Uhingen (DE); STOCKER, Frank, 70378 Stuttgart (DE)
(74) Vertreter: Morgenthum-Neurode, Mirko
(86) Internationale Anmeldenummer: PCT/EP2021/053933
(87) Internationale Veröffentlichungsnummer: WO 2021/165347

(56) Entgegenhaltungen:
- DE-A1- 2 411 236
- DE-U- 7 324 434
- DE-U1-202010 005 587

## Beschreibung

Die Erfindung betrifft ein Wellenlager zur Lagerung eines Spinnrotors einer Rotorspinnmaschine, mit einem zweireihigen Wälzlager, das zwei Wälzkörperreihen aufweist, die
- innenseitig innenringfrei auf zwei im Abstand voneinander an einer Rotorwelle angeordneten inneren Lagerbahnen und
- außenseitig auf äußeren Lagerbahnen
abrollen.

Rotorspinnmaschinen sind in vielfältigen Ausgestaltungen aus dem Stand der Technik bekannt.

Wesentlich für die Funktion der Rotorspinnmaschine sind dabei hohe Drehzahlen des Spinnrotors von mehr als 100.000 Umdrehungen pro Minute. Bekannte Wellenlager mit zweireihigen Wälzlagern der eingangsgenannten Art sind beispielsweise aus den Druckschriften DE 31 26 892 A1, DE 33 04 912 A1, DE 33 14 547 A1 und DE 20 2010 005 587 U1 bekannt und erlauben derzeit Drehzahlen des Spinnrotors von bis zu 110.000 Umdrehungen pro Minute, lassen darüber hinaus jedoch keine höheren Drehzahlen zu, was u. a. aus den bei höheren Drehzahlen auftretenden Resonanzen resultiert. Darüber hinaus resultieren bei den vorbekannten zweireihigen Wälzlagern aufgrund der bei höheren Drehzahlen auftretenden hohen radialen Belastungen steigende Betriebstemperaturen, die zu Schädigungen des Lagers und damit zu Störungen der Rotorspinnmaschine führen.

Weitere Wellenlager nah dem Stand der Technik werden auch aus den Druckschriften DE 24 11 236 A1 und DE 20 2010 005587 U1 bekannt gegeben. 1f

Hiervon ausgehend liegt der Erfindung die Aufgabe zugrunde, ein Wellenlager für die Lagerung eines Spinnrotors einer Rotorspinnmaschine bereitzustellen, welches insbesondere bei Drehzahlen von mehr als 110.000 Umdrehungen pro Minute eine hohe Zuverlässigkeit aufweist und einen störungsfreieren Betrieb einer mit dem Wellenlager ausgestatteten Rotorspinnmaschine ermöglicht.

Die Erfindung löst die Aufgabe durch ein Wellenlager mit den Merkmalen des Anspruchs 1. Vorteilhafte Weiterbildungen der Erfindung sind in den abhängigen Ansprüchen angegeben.

Das erfindungsgemäße Wellenlager weist zur Lagerung der Welle, insbesondere der Rotorwelle eines Spinnrotors einer Rotorspinnmaschine, ein zweireihiges Wälzlager mit zwei Wälzkörperreihen, ausbildend einen ersten und einen zweiten Lagerabschnitt, auf, das jeweils eine koaxial zur Rotorwelle angeordnete Wälzkörperreihe aufweist. Die Wälzkörper der Wälzkörperreihen sind dabei innenseitig ohne einen Innenring an zwei in Längsachsenrichtung der Rotorwelle im Abstand voneinander angeordneten inneren Lagerbahnen gelagert, welche in die Oberfläche der Rotorwelle eingebracht sind. Kennzeichnend für das erfindungsgemäße Wellenlager ist dabei, dass die Wälzkörper außenseitig an den äußeren Lagerbahnen von zwei separaten Außenringen gelagert sind, welche in Längsachsenrichtung der Rotorwelle betrachtet, im Abstand voneinander angeordnet sind. Des Weiteren sind die separaten Außenringe des ersten und zweiten Lagerabschnitts ihrerseits elastisch verlagerbar in einem Wellenlagergehäuse gelagert.

Die Separierung der Außenringe sowie die jeweilige, zueinander unabhängige elastische Lagerung der Außenringe in dem Wellenlagergehäuse erlaubt in vorteilhafter Weise im Gegensatz zu solchen Außenringen, die ortsfest mit dem Wellenlagergehäuse verbunden sind, Ausgleichsbewegungen gegenüber dem Wellenlagergehäuse durchzuführen. D. h., entsprechend der Ausgestaltung der elastischen Verlagerbarkeit können die Außenringe in eine oder mehrere Raumrichtungen ausweichen. Bei einer Verlagerbarkeit in alle Raumrichtungen können die Außenringe in axialer, in radialer sowie auch in Umfangsrichtung elastisch gegenüber dem Wellenlagergehäuse verschoben werden, wobei die Bewegungen entsprechend der elastischen Ausgestaltung gedämpft werden. Das in mehrere Raumrichtungen mögliche Ausweichen entspricht einer kardanischen Lagerung. Die Ausprägung der elastischen Verlagerbarkeit kann dabei auch zwischen dem ersten und zweiten Lagerabschnitt variieren, was im begrenzten Umfang auch Kippbewegungen der Rotorwelle gegenüber dem Wellenlagergehäuse ermöglicht.

Bei hohen Drehzahlen auftretende, lagerschädigende Resonanzen können somit in wirkungsvoller Weise durch die elastische Lagerung der Außenringe ausgeglichen werden, wodurch das Lager schädigende Einflüsse reduziert. Die erfindungsgemäße Wellenlagerung gewährleistet somit auch bei besonders hohen Drehzahlen von größer als 110.000 Umdrehungen pro Minute und mehr eine Langlebigkeit der Wellenlagerung, welche zu einer hohen Betriebssicherheit einer mit diesem Wellenlager ausgestalteten Rotorspinnmaschine führt.

Die Ausgestaltung der elastischen Lagerung der Außenringe der beiden Lagerabschnitte in dem Wellenlagergehäuse ist dabei grundsätzlich frei wählbar. Nach einer bevorzugten Ausgestaltung der Erfindung ist jedoch vorgesehen, dass die Außenringe mittels wenigstens eines an den Außenringen und dem Wellenlagergehäuse abgestützten Lagerkörpers in dem Wellenlagergehäuse gelagert sind, wobei der wenigstens eine Lagerkörper zumindest abschnittsweise im Bereich zwischen den Außenringen und dem Wellenlagergehäuse aus einer elastischen Einheit gebildet ist oder alternativ die elastische Einheit wenigstens in radialer oder axialer Richtung der Rotorwelle einfasst. Gemäß dieser bevorzugten Ausgestaltung der Erfindung weist der Lagerkörper zumindest abschnittsweise - in radialer Richtung betrachtet - einen aus einer elastischen Einheit gebildeten Abschnitt auf, welcher die elastische Verlagerbarkeit der Außenringe gegenüber dem Wellenlagergehäuse gewährleistet. Die elastische Einheit ermöglicht in besonders zuverlässiger Weise unter elastischer Verformung eine Verlagerung der Außenringe gegenüber dem Wellenlagergehäuse. Die Anordnung und Ausgestaltung der elastischen Einheit kann dabei derart erfolgen, dass sowohl in axialer als auch radialer Richtung sowie in Umfangsrichtung eine elastische Verlagerung der Außenringe gegenüber dem Wellenlagergehäuse erfolgen kann. Die Verwendung einer elastischen Einheit stellt dabei eine besonders einfache Möglichkeit zur Bereitstellung der Verlagerbarkeit dar, wobei über die Auswahl der elastischen Einheit die elastischen Eigenschaften einstellbar sind.

Gemäß der bevorzugten Ausgestaltung der Erfindung, bei welcher die elastische Einheit in radialer oder axialer Richtung der Rotorwelle eingefasst ist, kann die Einfassung vorzugsweise derart vorgesehen sein, dass der Lagerkörper jeweils ein Lagerkörperelement aufweist, welches zwischen der elastischen Einheit und dem in entsprechender radialer oder axialer Richtung benachbartem bzw. folgendem Element der Wellenlagerung angeordnet ist. Beispielsweise kann der Lagerkörper zur zuverlässigen Anordnung an einer Innenfläche des Wellenlagergehäuses ein angepasstes erstes Lagerkörperelement und zur Anordnung an einer Außenfläche des Außenrings ein an den Außenring angepasstes zweites Lagerkörperelement aufweisen. Im Bereich zwischen dem ersten und zweiten Lagerkörperelement ist die elastische Einheit angeordnet, welche das erste Lagerkörperelement gegenüber dem zweiten Lagerkörperelement abstützt, wodurch die elastische Verlagerbarkeit des Außenrings gegenüber dem Wellenlagergehäuse gewährleistet werden kann. Die Verwendung solcher Lagerkörperelemente stellt eine besonders zuverlässige Verbindung des Lagerkörpers sowohl mit dem Außenring als auch mit dem Wellenlagergehäuse dar. Darüber hinaus lässt sich die elastische Einheit besonders zuverlässig an dem ersten und zweiten Lagerkörperelement anordnen, so dass eine stabile Verbindung des Lagerkörpers sowohl mit dem Außenring als auch dem Wellenlagergehäuse gewährleistet werden kann.

Die Verbindung der elastischen Einheit mit dem Lagerkörper, bspw. mit seinen Lagerkörperelementen, kann dabei grundsätzlich in beliebiger Weise erfolgen, wobei diese insbesondere mittels Verklebung erreicht werden kann.

Nach einer besonders vorteilhaften Weiterbildung der Erfindung ist vorgesehen, dass der Lagerkörper wenigstens einseitig, weiter bevorzugt an allen Seiten, formschlüssig mit der elastischen Einheit wenigstens in radialer oder axialer Richtung, weiter bevorzugt sowohl in radialer als auch in axialer Richtung, verbunden ist. Die weiter bevorzugte Ausgestaltung des Lagerkörpers derart, dass dieser sowohl in radialer Richtung als auch in eine oder beide axialen Richtungen formschlüssig mit der elastischen Einheit verbunden ist, gewährleistet in besonders zuverlässiger Weise eine überaus ortsstabile Anordnung der elastischen Einheit an dem Lagerkörper. Eine bevorzugte zu einer radialen Abstützung ergänzende axiale Abstützung, welche bspw. durch einen oder zwei gegenüberliegend angeordnete, radial verlaufende axialen Flansche an dem Lagerkörper erzielt werden kann, kann die Stabilität der Verbindung der elastischen Einheit mit dem Lagerkörper in ergänzender Weise erhöhen.

Gemäß der alternativ bevorzugten Ausgestaltung der Erfindung ist vorgesehen, dass der Lagerkörper vollständig aus einer elastischen Einheit gebildet ist. Gemäß dieser bevorzugten Ausgestaltung der Erfindung ist der Lagerkörper unmittelbar mit dem Außenring und dem Wellenlagergehäuse verbunden bzw. stützt sich unmittelbar an diesem ab. Diese Ausgestaltung der Erfindung gewährleistet in besonderem Maße aufgrund der maximal möglichen radialen Erstreckung der elastischen Einheit eine elastische Verlagerbarkeit der Außenringe gegenüber dem Wellenlagergehäuse.

Die Ausgestaltung des Lagerkörpers zur Abstützung der Außenringe gegenüber dem Wellenlagergehäuse ist grundsätzlich neben den vorstehend dargestellten vorteilhaften Weiterbildungen frei wählbar. So besteht insbesondere gemäß einer besonders einfachen bevorzugten Ausgestaltung der Erfindung die Möglichkeit, den Lagerkörper einstückig auszubilden, wonach dieser sich in axialer Richtung erstreckt und mit beiden Außenringen verbunden ist. Dies kann bspw. unter Verwendung einer durchgehenden, an den Außenringen anliegenden elastischen Einheit oder durch ein, gemäß einer vorteilhaften bevorzugten Weiterbildung der Erfindung durchgehenden, mit der elastischen Einheit verbundenes Lagerkörperelement erreicht werden. Nach einer besonders bevorzugten Ausgestaltung der Erfindung ist jedoch vorgesehen, dass die Außenringe über separate, bevorzugt - in Längsachsenrichtung der Rotorwelle betrachtet - im Abstand voneinander angeordnete Lagerkörper in dem Wellenlagergehäuse gelagert sind.

Gemäß dieser bevorzugten Ausgestaltung der Erfindung weist das Wellenlager zwei getrennt voneinander angeordnete Lagerkörper zur elastischen Lagerung der beiden getrennten Außenringe auf. Diese Ausgestaltung der Erfindung ermöglicht es, für die beiden Außenringe unterschiedliche elastische Einheiten mit unterschiedlichen Eigenschaften zu verwenden, wodurch eine optimale Anpassung des Wellenlagers an die im Betrieb auftretenden Belastungen erfolgen kann. Durch diese bevorzugte Ausgestaltung der Erfindung kann in ergänzender Weise die Lebensdauer des Wellenlagers und somit die Betriebszeit einer mit dem Wellenlager ausgestatteten Rotorspinnmaschine gesteigert werden. Die elastische Einheit für die Lagerkörper kann dabei bspw. anhand dessen Elastizitätsmodul ausgewählt werden.

Nach einer weiteren bevorzugten Ausgestaltung der Erfindung ist insbesondere im Falle der Verwendung von zwei getrennten, im Abstand voneinander angeordneten Lagerabschnitten gemäß einer weiteren bevorzugten Ausgestaltung der Erfindung vorgesehen, dass im Bereich zwischen den Außenringen - in axialer Richtung der Rotorwelle betrachtet - ein Schmiermittelspeicher angeordnet ist. Die Verwendung eines Schmiermittelspeichers mit einem zur Schmierung der Lagerabschnitte des Wellenlagers geeigneten Schmiermittels erhöht dessen Lebensdauer in ergänzenderWeise, wobei die Anordnung im Bereich zwischen den Außenringen eine zuverlässige Schmiermittelversorgung beider Lagerabschnitte gewährleistet sowie die Möglichkeit bietet, das Wellenlager kompakt auszuführen.

Die Ausgestaltung des Schmiermittelspeichers zur Aufnahme und Bereitstellung des Schmiermittels ist dabei grundsätzlich frei wählbar. Nach einer besonders bevorzugten Ausgestaltung der Erfindung ist jedoch vorgesehen, dass der Schmiermittelspeicher einen Schaumstoffkörper aufweist, der zur Speicherung des Schmiermittels, insbesondere Schmieröls ausgebildet ist. Die Verwendung eines Schaumstoffkörpers gewährleistet eine zuverlässige Schmiermittelaufnahme und -speicherung sowie -bereitstellung, so dass in besonders zuverlässiger Weise eine Schmierung der Wälzkörper während des Betriebs des Wellenlagers gewährleistet ist.

Nach einer besonders bevorzugten Ausgestaltung der Erfindung ist dabei ferner ein Speicherträger vorgesehen, welcher den Schmiermittelspeicher, insbesondere den Schaumstoffkörper, von der Rotorwelle beabstandet. Die Verwendung des Speicherträgers in Form eines Abstandhalters im Bereich zwischen den Außenkörpern gewährleistet, dass der Schmiermittelspeicher während des Betriebs nicht in Kontakt mit der noch drehenden Rotorwelle gelangt, welche somit über die Lagerabschnitte geführt frei in dem Wellenlager verdreht werden kann. Die Verwendung des Speicherträgers zur Aufnahme und Positionierung des Schmiermittelspeichers gegenüber der Rotorwelle steigert somit die Betriebssicherheit des Wellenlagers in ergänzender Weise.

Zur Wartung des Wellenlagers und zur Anordnung eines Schmiermittels in dem Schmiermittelspeicher ist dabei nach einer bevorzugten Ausgestaltung der Erfindung vorgesehen, dass das Wellenlagergehäuse wenigstens eine verschließbare, an den Schmiermittelspeicher angrenzende Schmiermitteleinfüllöffnung aufweist. Die Anordnung einer Einfüllöffnung gewährleistet und ermöglicht während des Betriebs im Bedarfsfall ein Nachfüllen des Schmiermittels, wodurch in ergänzender Weise die Laufzeit des Wellenlagers gesteigert werden kann, nachdem in zuverlässiger Weise eine dauerhafte Schmierung gewährleistet ist.

Grundsätzlich ist die Ausgestaltung des Wälzlagers frei wählbar. Nach einer besonders bevorzugten Ausgestaltung der Erfindung ist jedoch vorgesehen, dass das Wälzlager als Kugellager und die Wälzkörperreihen als Kugelreihen ausgebildet sind. Die Verwendung von Kugeln als Wälzkörper gewährleistet eine besonders zuverlässige Übertragung sowohl radial als auch axial wirkender Kräfte von der Welle auf die Außenringe.

Nach einer bevorzugten Ausgestaltung der Erfindung ist die elastische Einheit durch ein Federelement aus einem metallischen Werkstoff ausgeformt. Eine solche federelastische Lagerung ist einfach und kostengünstig bereitzustellen und gewährleistet eine lange Lebensdauer. In alternativer Weise kann das Federelement nach einer bevorzugten Ausführungsform aus einem nichtmetallischen Werkstoff oder aus einer Kombination eines metallischen mit einem nichtmetallischen Werkstoff ausgebildet sein. Vorzugsweise kann der nichtmetallische Werkstoff ein kunststoffhaltiges Material sein. Solche Federelemente lassen sich kostengünstiger als metallische Werkstoffe herstellen und sind hinsichtlich der Ausgestaltungsmöglichkeiten variabler, so dass im Bedarfsfall komplexere Formen bereitstellbar sind.

Gemäß einer weiteren alternativ bevorzugten Ausführungsform kann die elastische Einheit durch ein Dämpfungselement aus einem kunststoffhaltigen Material wie bspw. aus einem Elastomer, einem Duroplast, einem Thermoplast oder ähnliches ausgebildet sein. Als weitere Alternative ist eine Fluiddämpfung bevorzugt, wobei das Fluid eine Flüssigkeit oder ein Gas sein kann. Abhängig von geforderten elastischen Lagereigenschaften der Wellenlagerung kann eine geeignete Dämpfungsart bereitgestellt werden, welche einzeln für sich in bekannter Weise unterschiedliche Vorteile mit sich bringt. Auch eine Kombination der verschiedenen elastischen Einheiten ist denkbar, sofern sich eine solche je nach Ausgestaltung des Wellenlagers und in Abhängigkeit der erforderlichen elastischen Lagereigenschaften als vorteilhaft zeigt.

Weitere Merkmale und Vorteile der Erfindung ergeben sich aus der nachfolgenden Beschreibung eines bevorzugten Ausführungsbeispiels der Erfindung, anhand der Figur und Zeichnung, die erfindungswesentliche Einzelheiten zeigen, und aus den Patentansprüchen. Die einzelnen Merkmale können je einzeln für sich oder zu mehreren in beliebiger Kombination bei einer bevorzugten Ausführungsform der Erfindung verwirklicht sein.

Ein Ausführungsbeispiel der Erfindung wird nachstehend mit Bezug auf die Zeichnungen erläutert. In den Zeichnungen zeigt:

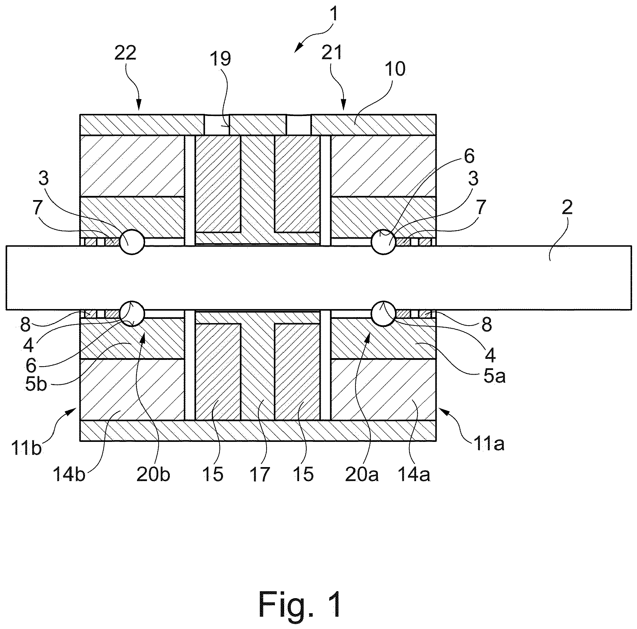

- Fig. 1: in einer schematischen Schnittansicht eine Ausführungsform eines Wellenlagers nach einem bevorzugten Ausführungsbeispiel.

Figur 1 zeigt in einer ersten Schnittansicht eine Ausführungsform eines Wellenlagers 1 zur drehbaren Aufnahme einer Rotorwelle 2 eines hier nicht dargestellten Spinnrotors einer Rotorspinnmaschine. Zur drehbaren Lagerung der Rotorwelle 2 weist das Wellenlager 1 einen ersten und zweiten Lagerabschnitt 21, 22 auf, in denen die Rotorwelle 2 jeweils eine innere Lagerbahn 4 aufweist, die in axialer Richtung im Abstand voneinander in die Oberfläche der Rotorwelle 2 eingebracht sind. Die inneren Lagerbahnen 4 dienen bei diesem bevorzugten Ausführungsbeispiel jeweils zur Aufnahme von als Kugeln ausgestalteten Wälzkörpern 3 ausgebildeten Wälzkörpern einer als jeweilige Kugelreihe ausgebildete Wälzkörperreihe 20a, 20b des ersten und zweiten Lagerabschnitts 21, 22. Die Wälzkörper 3 der Wälzkörperreihen 20a, 20b sind ihrerseits jeweils in - in axialer Richtung betrachtet - voneinander getrennten, koaxial zur Rotorwelle 2 verlaufenden Außenringen 5a, 5b gelagert, wobei Käfige 7 die Wälzkörper 3 der Wälzkörperreihen 20a, 20b in Umfangsrichtung im Abstand zueinander festlegen.

Die zur Lagerung der Wälzkörper 3 jeweils eine äußere Lagerbahn 6 aufweisenden Außenringe 5a, 5b des ersten und zweiten Lagerabschnitts 21, 22 sind ihrerseits jeweils über Lagerkörper 11a, 11b elastisch verschiebbar in einem Wellenlagergehäuse 10 gelagert. Die Lagerkörper 11a, 11b sind separat ausgebildet. Nach einem nicht dargestellten Ausführungsbeispiel ist ein gemeinsamer Lagerkörper vorgesehen. Der Lagerkörper oder die Lagerkörper 11a, 11b sind bei diesem Ausführungsbeispiel über eine elastische Einheit 14a, 14b unmittelbar an der Außenfläche der Außenringe 5a, 5b und der Innenseite des Wellenlagergehäuses 10 abgestützt. Nach einem nicht gezeigten Ausführungsbeispiel kann der Lagerkörper 11a, 11b zur Anordnung an den Außenringen 5a, 5b und an der Innenseite des Wellenlagergehäuses 10 jeweils ein an der Außenfläche der Außenringe 5a, 5b anliegendes erstes Lagerkörperelement sowie ein an der Innenseite des Wellenlagergehäuses 10 anliegendes zweites Lagerkörperelement aufweisen. Das zweite Lagerkörperelement ist dabei jeweils gegenüber dem zugeordneten ersten Lagerkörperelement über eine elastische Einheit 14a, 14b abgestützt. Die Abstützung über die elastische Einheit 14a, 14b ermöglicht eine elastische Verlagerung der Außenringe 5a, 5b und damit der Rotorwelle 2 in axialer, in radialer Richtung sowie in Umfangsrichtung. Die elastische Einheit 14a, 14b dämpft aufgrund ihrer elastischen Eigenschaften dabei die Bewegungen der Rotorwelle 2.

In axialer Richtung der Rotorwelle 2 betrachtet, ist im Bereich zwischen den Außenringen 5a, 5b innerhalb des Wellenlagergehäuses 10 ein als Schaumstoffkörper ausgebildeter Schmiermittelspeicher 15 angeordnet, der über einen Abstandshalter von der Rotorwelle 2 beabstandet ist. Der Abstandshalter weist hierzu eine koaxial zur Rotorwelle 2 angeordnete als Schmiermittelhülse ausgebildeten Speicherträger 17 auf, welche nach diesem bevorzugten Ausführungsbeispiel einen umlaufenden, den Speicherträger 17 an der Innenseite des Wellenlagergehäuses 10 abstützenden Steg umfasst, wodurch der Schmiermittelspeicher 15 zudem für jeden Lagerabschnitt 21, 22 einen separaten Schmiermittelspeicher 15 bereitstellt. Nach einem nicht dargestellten Ausführungsbeispiel ist der Steg Schmiermittel durchlässig, oder nach einem weiteren nicht dargestellten Ausführungsbeispiel ist der Speicherträger 17 ohne Steg ausgestaltet, wodurch ein beide Lagerabschnitte 21, 22 versorgender gemeinsamer Schmiermittelspeicher 15 bereitgestellt wird.

Zur Befüllung des Schmiermittelspeichers 15 mit Schmiermittel, welches innerhalb des Wellenlagergehäuses 10 zu dem ersten und zweiten Lagerabschnitt 21, 22 geführt wird, dienen in das Wellenlagergehäuse 10 eingebrachte Einfüllöffnungen 19. Zur Verhinderung eines Schmiermittelaustritts aus dem Wellenlager 1 sind die Außenringe 5a, 5b gegenüber der Rotorwelle 2 mittels Wellendichtringen 8 abgedichtet.

### Bezugszeichenliste

- 1: Wellenlager
- 2: Rotorwelle
- 3: Wälzkörper
- 4: innere Lagerbahn
- 5a, 5b: Außenring
- 6: äußere Lagerbahn
- 7: Käfig
- 8: Wellendichtring
- 10: Wellenlagergehäuse
- 11a, 11b: Lagerkörper
- 14a, 14b: elastisches Einheit
- 15: Schmiermittelspeicher
- 17: Speicherträger
- 19: Einfüllöffnung
- 20a, 20b: Wälzkörperreihe
- 21: erster Lagerabschnitt
- 22: zweiter Lagerabschnitt

## Patentansprüche

1. Wellenlager (1) zur Lagerung eines Spinnrotors einer Rotorspinnmaschine, mit einem zweireihigen Wälzlager, das zwei Wälzkörperreihen (20a, 20b) aufweist, die außenseitig auf äußeren Lagerbahnen (6) zweier separater Außenringe (5a, 5b) abrollen, welche entlang einer Längsachsenrichtung einer Welle, insbesondere einer Rotorwelle (2), im Abstand voneinander angeordnet sind, und
die Außenringe (5a, 5b) ihrerseits elastisch verlagerbar in einem Wellenlagergehäuse (10) gelagert sind,
**dadurch gekennzeichnet, dass**
die zwei Wälzkörperreihen (20a, 20b) innenseitig innenringfrei auf zwei im Abstand voneinander an der Rotorwelle (2) angeordneten inneren Lagerbahnen (4) abrollen.

2. Wellenlager (1) nach Anspruch 1, **dadurch gekennzeichnet, dass** die Außenringe (5a, 5b) mittels wenigstens eines an den Außenringen (5a, 5b) und dem Wellenlagergehäuse (10) abgestützten Lagerkörpers (11a, 11b) in dem Wellenlagergehäuse (10) gelagert sind, wobei der wenigstens eine Lagerkörper (11a, 11b) zumindest abschnittsweise im Bereich zwischen den Außenringen (5a, 5b) und dem Wellenlagergehäuse (10) aus einer elastischen Einheit (14a, 14b) gebildet ist oder die elastische Einheit (14a, 14b) wenigstens in radialer oder axialer Richtung der Rotorwelle (2) einfasst.

3. Wellenlager (1) nach Anspruch 2, **dadurch gekennzeichnet, dass** der Lagerkörper (11a, 11b) die elastische Einheit (14a, 14b) wenigstens in radialer oder axialer Richtung einfasst und in Einfassungsrichtung wenigstens einseitig formschlüssig mit der elastischen Einheit (14a, 14b) verbunden ist.

4. Wellenlager (1) nach Anspruch 1 oder 2, **dadurch gekennzeichnet, dass** der Lagerkörper (11a, 11b) vollständig aus der elastischen Einheit (14a, 14b) gebildet ist.

5. Wellenlager (1) nach einem oder mehreren der vorhergehenden Ansprüche, **dadurch gekennzeichnet, dass** die Außenringe (5a, 5b) über separate, bevorzugt im Abstand voneinander angeordnete Lagerkörper (11a, 11b) in dem Wellenlagergehäuse (10) gelagert sind.

6. Wellenlager (1) nach einem oder mehreren der vorhergehenden Ansprüche, **dadurch gekennzeichnet, dass** im Bereich zwischen den Außenringen (5a, 5b) ein Schmiermittelspeicher (15) angeordnet ist.

7. Wellenlager (1) nach Anspruch 6, **dadurch gekennzeichnet, dass** der Schmiermittelspeicher (15) einen Schaumstoffkörper aufweist, der zur Speicherung des Schmiermittels, insbesondere Schmieröl ausgebildet ist.

8. Wellenlager (1) nach Anspruch 6 oder 7, **gekennzeichnet durch** einen den Schmiermittelspeicher (15), insbesondere den Schaumstoffkörper von der Rotorwelle (2) beabstandenden Speicherträger (17).

9. Wellenlager (1) nach einem oder mehreren der vorhergehenden Ansprüche 6 bis 8, **dadurch gekennzeichnet, dass** das Wellenlagergehäuse (10) eine verschließbare, an den Schmiermittelspeicher (15) angrenzende Schmiermitteleinfüllöffnung (19) aufweist.

10. Wellenlager (1) nach einem oder mehreren der vorhergehenden Ansprüche, **dadurch gekennzeichnet, dass** das Wälzlager als Kugellager und die Wälzkörperreihen (20a, 20b) als Kugelreihen ausgebildet sind.

11. Wellenlager (1) nach einem oder mehreren der vorhergehenden Ansprüche, **dadurch gekennzeichnet, dass** die elastische Einheit (14a, 14b) durch ein Federelement aus einem metallischen oder nichtmetallischen Werkstoff, durch ein Dämpfungselement aus einem kunststoffhaltigen Material oder durch eine Fluiddämpfungseinheit ausgebildet ist.

## Claims

1. Shaft bearing (1) for mounting a spinning rotor of a rotor spinning machine, comprising a double-row rolling bearing which has two rows of rolling elements (20a, 20b) which roll on the outside on outer raceways (6) of two separate outer rings (5a, 5b) which are arranged at a distance from one another along a longitudinal axis direction of a shaft, in particular of a rotor shaft (2), and
the outer rings (5a, 5b) are in turn resiliently displaceably borne in a shaft bearing housing (10),
**characterized in that**
the two rows of rolling elements (20a, 20b) roll on the inside, without an inner ring, on two inner bearing tracks (4) arranged at a distance from one other on the rotor shaft (2).

2. Shaft bearing (1) according to claim 1, **characterized in that** the outer rings (5a, 5b) are borne in the shaft bearing housing (10) by means of at least one bearing body (11a, 11b) supported on the outer rings (5a, 5b) and the shaft bearing housing (10), the at least one bearing body (11a, 11b) being formed at least in portions in the region between the outer rings (5a, 5b) and the shaft bearing housing (10) from a resilient unit (14a, 14b), or enclosing the resilient unit (14a, 14b) at least in the radial or axial direction of the rotor shaft (2).

3. Shaft bearing (1) according to claim 2, **characterized in that** the bearing body (11a, 11b) encloses the resilient unit (14a, 14b) at least in the radial or axial direction and is form-fittingly connected to the resilient unit (14a, 14b) on at least one side in the direction of enclosure.

4. Shaft bearing (1) according to either claim 1 or claim 2, **characterized in that** the bearing body (11a, 11b) is formed entirely from the resilient unit (14a, 14b).

5. Shaft bearing (1) according to one or more of the preceding claims, **characterized in that** the outer rings (5a, 5b) are borne in the shaft bearing housing (10) via separate bearing bodies (11a, 11b) which are preferably arranged at a distance from one another.

6. Shaft bearing (1) according to one or more of the preceding claims, **characterized in that** a lubricant reservoir (15) is arranged in the region between the outer rings (5a, 5b).

7. Shaft bearing (1) according to claim 6, **characterized in that** the lubricant reservoir (15) has a foam member which is configured for storing the lubricant, in particular lubricating oil.

8. Shaft bearing (1) according to either claim 6 or claim 7, **characterized by** a reservoir support (17) which spaces the lubricant reservoir (15), in particular the foam member, apart from the rotor shaft (2).

9. Shaft bearing (1) according to one or more of the preceding claims 6 to 8, **characterized in that** the shaft bearing housing (10) has a closable lubricant filling opening (19) adjacent to the lubricant reservoir (15).

10. Shaft bearing (1) according to one or more of the preceding claims, **characterized in that** the rolling bearing is designed as a ball bearing, and the rows of rolling elements (20a, 20b) are designed as rows of balls.

11. Shaft bearing (1) according to one or more of the preceding claims, **characterized in that** the resilient unit (14a, 14b) is formed by a spring element made of a metal or non-metal material, by a damping element made of a plastics-containing material, or by a fluid damping unit.

## Revendications

1. Palier d'arbre (1) destiné à supporter un rotor de filature d'un métier à filer à rotor, comportant un palier à roulement à deux rangées qui présente deux rangées de corps de roulement (20a, 20b) roulant du côté extérieur sur des chemins de roulement extérieurs (6) de deux bagues extérieures (5a, 5b) séparées, lesquelles sont disposées à distance l'une de l'autre le long d'une direction d'axe longitudinal d'un arbre, en particulier d'un arbre de rotor (2), et
les bagues extérieures (5a, 5b) sont à leur tour logées de manière à pouvoir se déplacer élastiquement dans un logement de palier d'arbre (10),
**caractérisé en ce que**
les deux rangées de corps de roulement (20a, 20b) roulent du côté intérieur sans bague intérieure sur deux chemins de roulement intérieurs (4) disposés à distance l'un de l'autre sur l'arbre de rotor (2).

2. Palier d'arbre (1) selon la revendication 1, **caractérisé en ce que** les bagues extérieures (5a, 5b) sont logées dans le logement de palier d'arbre (10) au moyen d'au moins un corps de palier (11a, 11b) prenant appui sur les bagues extérieures (5a, 5b) et le logement de palier d'arbre (10), l'au moins un corps de palier (11a, 11b) étant formé à partir d'un ensemble élastique (14a, 14b), au moins dans certaines sections dans la zone entre les bagues extérieures (5a, 5b) et le logement de palier d'arbre (10) ou bordant l'ensemble élastique (14a, 14b) au moins dans la direction radiale ou axiale de l'arbre de rotor (2).

3. Palier d'arbre (1) selon la revendication 2, **caractérisé en ce que** le corps de palier (11a, 11b) entoure l'ensemble élastique (14a, 14b) au moins dans la direction radiale ou axiale et est relié à l'ensemble élastique (14a, 14b) par complémentarité de forme au moins d'un côté dans la direction de bordure.

4. Palier d'arbre (1) selon la revendication 1 ou 2, **caractérisé en ce que** le corps de palier (11a, 11b) est entièrement formé à partir de l'ensemble élastique (14a, 14b).

5. Palier d'arbre (1) selon l'une ou plusieurs des revendications précédentes, **caractérisé en ce que** les bagues extérieures (5a, 5b) sont logées dans le logement de palier d'arbre (10) par l'intermédiaire de corps de palier (11a, 11b) séparés, de préférence disposés à distance les uns des autres.

6. Palier d'arbre (1) selon l'une ou plusieurs des revendications précédentes, **caractérisé en ce qu'**un réservoir de lubrifiant (15) est disposé dans la zone entre les bagues extérieures (5a, 5b).

7. Palier d'arbre (1) selon la revendication 6, **caractérisé en ce que** le réservoir de lubrifiant (15) présente un corps en mousse qui est conçu pour stocker le lubrifiant, en particulier l'huile lubrifiante.

8. Palier d'arbre (1) selon la revendication 6 ou 7, **caractérisé par** un support de réservoir (17) espaçant le réservoir de lubrifiant (15), en particulier le corps en mousse, de l'arbre de rotor (2).

9. Palier d'arbre (1) selon l'une ou plusieurs des revendications précédentes 6 à 8, **caractérisé en ce que** le logement de palier d'arbre (10) présente une ouverture de remplissage de lubrifiant (19) pouvant être fermée et adjacente au réservoir de lubrifiant (15).

10. Palier d'arbre (1) selon l'une ou plusieurs des revendications précédentes, **caractérisé en ce que** le palier à roulement est réalisé comme un palier à billes et les rangées de corps de roulement (20a, 20b) sont réalisées comme des rangées de billes.

11. Palier d'arbre (1) selon l'une ou plusieurs des revendications précédentes, **caractérisé en ce que** l'ensemble élastique (14a, 14b) est formé par un élément de ressort en un matériau métallique ou non métallique, par un élément d'amortissement en un matériau contenant une matière plastique ou par une unité d'amortissement par fluide.
